# EUROPEAN PATENT SPECIFICATION

(11) **EP 2 970 622 B1**
(45) Date of publication and mention of the grant of the patent: **31.01.2018**
(21) Application number: 14770260.9
(22) Date of filing: 14.03.2014
(51) Int. Cl.: C08J 9/36, C08J 7/04, C08K 3/04, C08L 75/04, B05D 7/02

(54) **ELECTRICALLY CONDUCTIVE AND DISSIPATIVE POLYURETHANE FOAMS**
ELEKTRISCH LEITFÄHIGE UND DÄMMENDE POLYURETHANSCHAUMSTOFFE
MOUSSES DE POLYURÉTHANE CONDUCTRICES DE FAÇON ÉLECTRIQUE ET DISSIPATIVES

(30) Priority: 15.03.2013 US 201361790346 P; 08.07.2013 US 201313936383
(43) Date of publication of application: 20.01.2016
(73) Proprietor: Covestro LLC, Pittsburgh, PA 15205 (US); The Texas A&M University System, College Station, TX 77843 (US)
(72) Inventor: HAIDER, Karl, W., Wexford, PA 15090 (US); HAGER, Stanley, L., Cross Lanes, WV 25313 (US); GRUNLAN, Jamie, C., College Station, TX 77840 (US)
(74) Representative: Levpat
(86) International application number: PCT/US2014/026994
(87) International publication number: WO 2014/152140

(56) References cited:
- WO-A1-2012/113543
- JP-A- 2009 139 866
- US-A- 4 231 901
- US-A1- 2007 054 577
- US-A1- 2010 159 366
- US-A1- 2010 159 366
- US-A1- 2010 227 070
- US-A1- 2010 227 070
- US-B2- 6 670 545
- KIM, Y. S. ET AL.: 'Development of layer-by-layer assembled carbon nanofiber-filled coatings to reduce polyurethane foam flammability' POLYMER. vol. 52, 2011, pages 2847 - 2855, XP055290757

## Description

### BACKGROUND OF THE INVENTION

This invention relates to electrically conductive and dissipative polyurethane foams and to a process for preparing these electrically conductive and dissipative polyurethane foams.

Polyurethane foams, like many other polymers, are excellent electrical insulators. While this can be advantageous in some applications, there are situations where electrical conductivity or charge dissipation would be advantageous. One such area is packaging foam for sensitive electronic components, where the accumulation of static charge can lead to electrical discharge and result in damage to the components. Another could be in safety foam where the foam may protect against ignition and explosion of fuel tanks if punctured.

For this reason, several approaches have been developed to reduce electrical resistivity in polyurethane flexible foams. The most common methods include (1) adding a component which reduces the resistivity of the foam, (2) coating the foam with a component to reduce the resistivity, and (3) post treatment of the foam by swelling to incorporate a component to reduce the resistivity into the cell structure.

U.S. Patent 5,096,934 describes anti-static polyurethane foams, which have a surface resistivity of less than 1 x 10¹² ohms per square and static decay times of about 2 seconds or less. These polyurethane foams are prepared from isocyanate terminated prepolymers that comprise the reaction product of a polyisocyanate (preferably TDI or MDI) with an oxyethylene containing polyol having a hydroxyl functionality of at least 2, and containing at least 40% oxyethylene, and a second polyol having a hydroxyl functionality of 3 to 8. However, this approach, relying on an inherently anti-static polymer, is limited in the level of electrical resistivity reduction that can be achieved. The working examples indicate a number of foams having surface resistivity in the range of 10⁹ to 10¹¹ ohms per square, and there is no teaching on how one could use this approach to achieve more significant reduction in resistivity.

One approach to overcome this limitation has been to add conductive additives, such as carbon black, carbon fiber, metals, and/or metal ionizable salts such as sodium thiocyanate to the polyurethane components prior to foaming. In this manner, surface resistivity in cellular and non-cellular urethanes as low as 10⁴ ohms per square can be achieved. However, as disclosed at column 1, lines 42-63 of U.S. Patent 7,504,052, the high levels of additive required to achieve this level of surface resistivity often result in very high viscosity reaction components which makes processing difficult. Also the carbon fiber filled systems lose conductivity rapidly when subjected to mechanical stress, presumably due to fracturing of the carbon fibers.

U.S. Patent 7,504,052 discloses polyurethanes containing-conductive carbon blacks and carbon fibers at specified ratios and levels to achieve anti-static foams. It is reported that these systems have sufficiently low viscosity to be processed with conventional polyurethane processing equipment. However, when trying to use low levels (i.e. about 1% by weight, based on the weight of the foam) of multi-walled carbon nanotubes in place of carbon black, their comparative examples show that it is extremely difficult (if not impossible) to process mixtures of the polyol components, containing the multi-walled carbon nanotubes and isocyanates. See Examples 4, 5 and 9.

In order to overcome some of the aforementioned difficulties with adding conducting materials to the foam components, a variety of alternative approaches, include fixing conducting particles to the surface with binders or post treatment of the foams, to introduce conducting species, have been developed. See, for example, U.S. Patent 5,096,934, column 2, line 3- line 47. Unfortunately, none of these methods have been widely accepted and/or commercial as (i) the post treatment of foams to impregnate the foam with anti-static additives requires additional processing, and thus increases the cost, and (ii) coating foams with carbon black leads to contamination problems because the additives slough off during use, and (iii) coating foams with antistatic additives such as quaternary ammonium salts also result in contamination problems as the additives slough off and do not create permanent anti-static properties.

Since the discovery of carbon nanotubes in 1991 by lijima, Nature, 354, pp. 56-58 (1991), extensive research has been carried out involving the synthesis, chemistry, and manipulation of these materials. Carbon nanotubes, which are also sometimes referred to as carbon fibrils, are seamless tubes of graphite sheets with full fullerene caps and were first discovered as multi-layer concentric tubes of multi-walled carbon nanotubes and subsequently, as single-walled carbon nanotubes. Carbon nanotubes are electrically conductive along their length, chemically stable, and capable, individually, of having a very small diameter (much less than 100 nanometers) and large aspect ratios (length/diameter). In the recent past, the art has combined carbon nanotubes with various materials such as, for example, polyurethanes, in an effort to alter the surface resistivity and/or anti-static properties of polyurethanes.

U.S. Patents 7,645,497 and 7,645,400 describe compositions that contain both nanotubes and polyurethanes. These compositions may be multi-layer materials as in the '497 patent; or coated films formed by coating with a carbon nanotube composition that includes polyurethanes as in the '400 patent. The multi-layer materials in the '497 patent require a specialty material such as a polythiophene in one of the layers. In the '400 patent, conducting films are prepared from dispersions containing CNTs and a conducting polymer, or CNTS and a heterocyclic compound trimer as described at column 4, line 27 through column 22, line 15. These references appear to describe the various compositions therein as "conductive".

U.S. Patent 7,491,753 discloses foams having antimicrobial and/or antistatic properties. These foams comprise a base polymer blended with a cationically-charged polymer composition comprising a non-cationic ethylenically unsaturated monomer, an ethylenically unsaturated monomer capable of providing a cationic charge to the polymer composition, and a steric stabilization component incorporated into the ionically-charged polymer composition, wherein the steric stabilization component is a polymerizable surfactant, a monomer having alkoxylate functionality or a protective colloid. Carbon nanotubes are described as suitable antistatic agents.

Layer-by-layer technology is a well-known technique for the conformal coating of surfaces. In this technique, films are prepared by alternating substrate exposure to dispersions or solutions of oppositely charged materials. Any charged nanoscale objects, such as non-covalent complexes, clusters, colloids, salts, ions, or polymers are suitable for this deposition method. Using this technique, a charged material is deposited onto a surface. Following a washing step, a layer of material containing the opposite charge is deposited. This process can be repeated to deposit successive monolayers of charged materials until the desired coating thickness is achieved.

A layer-by-layer process for making electroconductive woven and non-woven fabrics is disclosed in U.S. Patent 7,468,332. This process consists of 1) special pretreatment of the fabric for activation and to make it suitable for application and attachment of a conductive coating with the layer-by-layer technique; and 2) subsequent application and attachment of a conductive coating by means of the layer-by-layer technique. However, when discussing the potential of carbon nanotubes as suitable examples of conductive nanoparticles, the authors make reference only to oxidized carbon nanotubes (see column 12, line 5). This oxidation step, which is used to introduce charged groups onto the surface of the CNTs requires an additional processing step, prior to preparation of the layer-by-layer coating.

The JP 2009-139866 reference discloses conductive polyurethane foam, a method of preparing this conductive foam and a conductive roller. The process described therein preparing a dispersion that contains a resin and another material such as, for example, carbon nanotubes or carbon black; immersing a polyurethane foam in this dispersion; removing the foam from the aqueous dispersion; and drying; thus forming a conductive coating layer on the polyurethane foam. This process results in a mass of a conductive coating layer being applied all at once, and does not allow one to control the amount of the coating layer that is applied. Although the examples of this reference include the volume resistivity of the coated polyurethanes in units of ohm·cm, when converted to surface resistivity (by dividing by the coating thickness), the reported values in this reference are substantially higher than the surface resistivity of the coated polyurethane foams of the present invention.

The journal article titled "High Electrical Conductivity and Transparency in Deoxycholate-Stabilized Carbon Nanotube Thin Films" in Journal of Physical Chemistry, 2010, Vol. 114, pp. 6325-6333 describes use of the layer-by-layer technique to generate transparent, highly conductive thin films which contain carbon nanotubes. The films were less than 100 nm thick, and were created by alternately exposing a substrate to non-covalent complexes of nanotubes and sodium deoxycholate, and then to a solution of poly(diallydimethylammonium chloride) [PDDA]. Suitable substrates include plastic films such as polyethylene terephthalate (PET), polystyrene (PS) and polypropylene, glass slides, silicon wafers and fibers. The effect of various types of nanotubes on transparency and conductivity is studied. Nanotube types include single-walled carbon nanotubes, few-walled carbon nanotubes and multi-walled carbon nanotubes.

In accordance with the invention, a layer-by-layer coating technique is used to prepare either electrically conducting or dissipative flexible polyurethane foams by coating with alternating layers of charged materials. This has not previously been done. In the present invention, after the deposition of very few bi-layers, the surface of the foams show dramatically reduced surface resistivity, i.e. on the order of 9 orders of magnitude reduction in surface resistivity. This process is advantageous compared to a process in which conducting fillers are added to the foam because the coating requires only very low levels of the conducting material to afford large decreases in electrical resistivity and, unlike conventional additives to the foam formulation, it results in significant decrease in surface resistivity with only a very small weight percent of the conductive material based on the entire weight of the foam. Foam properties and/or processing are not degraded since the foams are treated with alternating layers of oppositely changed materials after the foams are manufactured. Also, due to the nature of the layer-by-layer process, one can precisely control the thickness of the coating to achieve the desired level of electrical resistivity. Additionally, our process can be practiced where one of the materials is a non-covalent complex of pristine multi-walled carbon nanotubes (CNTs) and charged materials, such as, for example, anionic or cationic surfactants, and therefore does not require an additional processing step to first oxidize the CNTs. It is not obvious that the layer by layer coatings of the prior art could be used to uniformly coat the porous structure which is typical of a polyurethane foam.

### SUMMARY OF THE INVENTION

This invention relates to polyurethane foams which have a surface resistivity of less than or equal to 10¹² ohms per square, and to a process for preparing these polyurethane foams which have a surface resistivity of less than or equal to 10¹² ohms per square.

A process for preparing a coated polyurethane foam comprising:
(1) providing a polyurethane foam substrate;
(2) applying a layer of a first material to the polyurethane foam substrate;
(3) rinsing the coated polyurethane foam substrate with deionized water;
(4) optionally, drying the coated polyurethane foam substrate with air;
(5) applying a layer of a second material to the coated polyurethane foam substrate;
(6) rinsing the coated polyurethane foam substrate with deionized water;
(7) optionally, drying the coated polyurethane foam substrate with air;
   and
(8) optionally, repeating the process to form additional bilayers of coatings on the polyurethane foam substrate;
wherein (i) the first material and the second material are oppositely charged materials; (ii) one of the first material and the second material is a charged carbon allotrope which is selected from the group consisting of
(a) carbon allotropes which are charged by direct covalent attachment to a cationic group,
(b) carbon allotropes which are charged by direct covalent attachment to an anionic group,
(c) non-covalent complexes of carbon allotropes with at least one cationically charged surfactant,
(d) non-covalent complexes of carbon allotropes with at least one anionically charged surfactant,
(e) mixtures of (a) and (c)
   and
(f) mixtures of (b) and (d);
(iii) the other material of the first material and the second material is a charged polymer; (iv) the resultant coated polyurethane foam has a surface resistivity of less than or equal to 10¹² ohms/square; and (v) the resultant coated polyurethane foam contains at least 1 % by weight of the coating composition, based on 100% by weight of the coated polyurethane foam.

The polyurethane foam of the present invention has a surface resistivity less than or equal to 10¹² ohms per square. This foam comprises:
(a) a polyurethane foam substrate,
   and
(b) at least one bilayer of a coating composition on the polyurethane foam substrate, wherein said coating composition comprises:
   (1) at least one layer of a charged carbon allotrope which is selected from the group consisting of
      (a) carbon allotropes which are charged by direct covalent attachment to a cationic group,
      (b) carbon allotropes which are charged by direct covalent attachment to an anionic group,
      (c) non-covalent complexes of carbon allotropes with at least one cationically charged surfactant,
      (d) non-covalent complexes of carbon allotropes with at least one anionically charged surfactant,
      (e) mixtures of (a) and (c)
         and
      (f) mixtures of (b) and (d);
      and
   (2) at least one layer of a charged polymer;
wherein (i) the charged polymer is anionically charged when the carbon allotrope is cationically charged, and the charged polymer is cationically charged when the carbon allotrope is anionically charged, and (ii) the coated polyurethane foam contains at least 1% by weight of the coating composition, based on 100% by weight of the coated polyurethane foam.

In a preferred embodiment of the present invention, the total weight of the coating composition applied to the polyurethane foam is less than 10% (preferably less than 8% and most preferably less than 6%) by weight, based on 100% by weight of the polyurethane foam substrate.

In another preferred embodiment of the invention, the excess liquid from the foam is removed after application of any or all layers of a charged material and/or after rinsing of the foam substrate. The excess liquid may be removed by, for example, wringing, squeezing, etc.

### BRIEF DESCRIPTION OF THE DRAWINGS

Figure 1, a schematic view of a layer-by-layer deposition process used to apply layers of coatings. Steps 1-4 are repeated until the desired number of bilayers are applied to the substrate.
Figure 2, a side elevation drawing of a foam substrate coated with 2 bilayers using the layer-by-layer process in which the first material applied to the substrate is cationically charged and the second material is anionically charged.

### DETAILED DESCRIPTION OF THE INVENTION

Except in the operating examples, or where otherwise indicated, all numbers expressing quantities, percentages, OH numbers, functionalities and so forth in the specification are to be understood as being modified in all instances by the term "about."

All ranges as set forth herein are intended to be inclusive of the end points unless expressly stated otherwise.

Any combination of upper and lower ranges set forth herein may be used, inclusive of the end points unless expressly stated otherwise.

Isocyanate index is the relative stoichiometric amount of isocyanate functional groups necessary to react with the isocyanate reactive groups present in the overall foam formulation. It is expressed as a percentage in this application. Thus equal stoichiometric amounts of isocyanate functional groups and isocyanate-reactive functional groups in the formulation provide an index of 100%.

The functionalities of the polyether polyols cited herein are so called nominal functionalities, which are based solely on functionalities of the starter compounds that are added in preparing the polyols. Monofunctional impurities formed during alkoxylation with propylene oxide are not included in the calculation of functionality for the purposes of this invention.

The term "molecular weight" refers to the number average molecular weight unless otherwise stated.

As used herein, the term "deionized water" refers to deionized water that has been demineralized to 18.2 Mohm.

As used herein, the term "conductive" means that the coated polyurethane foam has a surface resistivity of less than 10⁵ ohms per square.

As used herein, the term "dissipative" means that the coated polyurethane foam has a surface resistivity of between 10⁵ ohms per square and 10¹² ohms per square, inclusive of the end points.

As used herein, the term "bilayer" refers to a coating that is comprised of a layer of a first material and a layer of a second material, wherein the first material and the second material are oppositely charged materials.

As used herein, the term "charged polymer" refers to a polymeric material containing one or more anionic groups or cationic groups.

Suitable polyurethane foam substrates for the present invention are flexible, open celled foams. The foams may be molded, slab, bonded, etc. It is preferred that the polyurethane foams herein have a relatively low density, preferably less than 2 pcf (i.e. 32.04 kg/m³). Foams are known to be cellular materials. The fact that foams are cellular materials means that the surfaces are not smooth. The lack of a smooth surface makes the application of a uniform coating on the surface of the porous foam difficult, and may present challenges.

In accordance with the present invention, the polyurethane foams herein comprise the reaction product of (a) at least one diisocyanate or polyisocyanate, with (b) at least one isocyanate-reactive component, in the presence of (c) at least one blowing agent, and (d) at least one catalyst. In addition, these polyurethane foams may comprise other additives and auxiliary agents such as, for example, surfactants, lubricants and/or metal working fluids, antioxidants, stabilizers, flame retardants, colorants, pigments, etc.

Suitable diisocyanates and polyisocyanates for preparing the polyurethane foams herein are those which contain two or more free NCO groups per molecule and are those conventionally used to make flexible, open celled polyurethane foams. Useful polyisocyanates include aromatic, aliphatic, and cycloaliphatic di- and polyisocyanates. Examples include toluene diisocyanates (TDI), diphenylmethane diisocyanates (MDI), naphthalene diisocyanates, isophorone diisocyanate, hexamethylene diisocyanates (HDI), polymeric MDIs, and polyisocyanates modified with carbodiimide, ester, urea, urethane, allophanate, isocyanurate, biuret, or other functionalities, and the like, and mixtures thereof. Preferred polyisocyanates are TDI (usually a mixture of 2,4- and 2,6-isomers), MDIs, and mixtures of these. Most preferred are 2,4- and/or 2,6-toluene diisocyanate.

Suitable isocyanate-reactive components for preparing the polyurethane foams include, for example, polyether polyols, polyester polyols, polycarbonate polyols, crosslinking agents, chain extending agents, etc. The higher molecular weight isocyanate-reactive components suitable herein may contain from about 2 to about 8, preferably from about 2 to about 6, and more preferably from about 2 to about 4 isocyanate-reactive groups which may be hydroxyl groups, amine groups or a combination thereof. As it known by the skilled artisan, crosslinking agents typically have from 3 to 4 isocyanate-reactive groups, and chain extending agents typically contain 2 isocyanate-reactive groups. It is preferred that all of the isocyanate-reactive groups are hydroxyl groups.

The preferred higher molecular weight compounds include, for example, polyoxyalkylene glycols, triols, tetrols and higher functionality polyols, mixtures thereof and/or copolymers thereof. The preferred polyoxyalkylenes of the present invention comprise polyoxyethylene, polyoxypropylene, mixtures thereof and/or copolymers thereof. When copolymers are used, the ethylene oxide and propylene oxide may be added simultaneously or sequentially to provide internal blocks, terminal blocks or random distribution of the oxyethylene groups and/or oxypropylene groups in the polyether polyol. Suitable starters or initiators for these compounds include but are not limited to, ethylene glycol, propylene glycol, diethylene glycol, dipropylene glycol, tripropylene glycol, trimethyol-propane, glycerol, pentaerythritol, sorbitol, sucrose, ethylenediamine, toluene diamine, etc. By alkoxylation of the starter, a suitable polyoxyalkylene polyether polyol can be formed. The alkoxylation reaction may be catalyzed using any conventional catalyst including, for example, basic catalsyts such as potassium hydroxide (KOH) or sodium hydroxide (NaOH), or a double metal cyanide (DMC) catalyst. It is preferred that the higher molecular weight isocyanate-reactive compounds have a molecular weight in the range of from about 1000 to 12,000, more preferably from about 1000 to about 6000 and most preferably from about 2000 to about 4000.

Suitable blowing agents for preparing the polyurethane foams herein include, for example chemical blowing agents, i.e. isocyanate reactive agents that generate blowing gases, such as for example water and formic acid and physical blowing agents such as carbon dioxide, chlorofluorocarbons, highly fluorinated and/or perfluorinated hydrocarbons, chlorinated hydrocarbons, aliphatic and/or cycloaliphatic hydrocarbons such as propane, butane, pentane, hexane, etc., or acetals such as methylal. These physical blowing agents are usually added to the polyol component of the system. However, they can also be added in the isocyanate component or as a combination of both the polyol component and the isocyanate component. It is also possible to use them together with highly fluorinated and/or perfluorinated hydrocarbons, in the form of an emulsion of the polyol component. If emulsifiers are used, they are usually oligomeric acrylates which contain polyoxyalkylene and fluoroalkane radicals bonded as side groups and have a fluorine content of from about 5 to 30% by weight. Such products are sufficiently well known from plastics chemistry, e.g. EP-A-0351614.

The amount of blowing agent or blowing agent mixture used is from 0.5 to 20%, preferably from 0.75 to 10% by weight, based in each case on the total weight of the isocyanate-reactive component. When water is the blowing agent, it is typically present in an amount of from 0.5 to 1 0%, and preferably from 0.75 to 7% by weight, based on the total weight of the isocyanate-reactive component. The addition of water can be effected in combination with the use of the other blowing agents described. Water is the preferred blowing agent. Also, preferred is the use of water along with pressurized carbon dioxide that is dispersed in the polyol or resin blend and frothed by passing through a pressure let down device such as employed for example in the Henecke Novaflex, CarDio (Cannon Viking Limited) and Beamech (CO₂) machines, which are known by those skilled in the art.

At least one polyurethane catalyst is required to catalyze the reactions of the isocyanate-reactive components and water with the polyisocyanate. It is common to use both an organoamine and an organotin compound for this purpose. Suitable polyurethane catalysts are well known in the art; an extensive list appears in U.S. Patent 5,011,908, Suitable organotin catalysts include tin salts and dialkyltin salts of carboxylic acids. Examples include stannous octoate, dibutyltin dilaurate, dibutyltin diacetate, stannous oleate, and the like. Stannous octoate is particularly preferred. Preferred organoamine catalysts are tertiary amines such as trimethylamine, triethylamine, triethylenediamine, bis(2,2'-dimethyl-amino)-ethyl ether, N-ethylmorpholine, diethylenetriamine, and the like. The polyurethane catalysts are typically used in an amount within the range of about 0.05 to about 3 parts, more preferably from about 0.1 to about 2 parts, per 100 parts of isocyanate-reactive mixture.

The polyurethane foam herein is preferably produced in the presence of a surfactant. Surfactants are known to help stabilize a foam until it cures. Silicone surfactants suitable for this purpose are those well known in the polyurethane industry. A wide variety of organosilicone surfactants are commercially available. Examples of suitable surfactants are Niax L-620 surfactant, a product of Momentive Performance Materials, Niax L635, also a product of Momentive Performance Materials, and Tegostab B8244, a product of Evonik-Goldschmidt. Many other silicone surfactants known to those in the art may be substituted for these suitable silicones. The surfactant is typically used in an amount within the range of about 0.1 to 4, preferably from about 0.2 to 3, parts per 100 parts of isocyanate-reactive mixture.

The polyurethane foam of the present invention has a surface resistivity less than or equal to 10¹² ohms per square. This foam comprises:
(a) a polyurethane foam substrate,
   and
(b) at least one bilayer of a coating composition on the polyurethane foam substrate, wherein said coating composition comprises:
   (1) at least one layer of a charged carbon allotrope which is selected from the group consisting of
      (a) carbon allotropes which are charged by direct covalent attachment to a cationic group,
      (b) carbon allotropes which are charged by direct covalent attachment to an anionic group,
      (c) non-covalent complexes of carbon allotropes with at least one cationically charged surfactant,
      (d) non-covalent complexes of carbon allotropes with at least one anionically charged surfactant,
      (e) mixtures of (a) and (c)
         and
      (f) mixtures of (b) and (d);
      and
   (2) at least one layer of a charged polymer;
wherein (i) the charged polymer is anionically charged when the carbon allotrope is cationically charged, and the charged polymer is cationically charged when the carbon allotrope is anionically charged, and (ii) the coated polyurethane foam contains at least 1% by weight of the coating composition, based on 100% by weight of the coated polyurethane foam.

In accordance with the present invention, the total weight of the coating present should be greater than or equal to 1% by weight, preferably greater than or equal to 1.25% by weight, and more preferably greater than or equal to 1.5% by weight, based on 100% by weight of the coated polyurethane foam. The total weight of the coating present should be less than or equal to 10% by weight, preferably less than or equal to 9.5% by weight, more preferably less than or equal to 8%, and most preferably less than or equal to 6% by weight, based on 100% by weight of the coated polyurethane foam. Any combination of these upper and lower limits may be suitable.

In a preferred embodiment, when carbon black is the carbon allotrope, the total weight of the coating present is preferably greater than or equal to 1.25%, more preferably greater than or equal to 2%, and most preferably greater than or equal to 4% by weight. In this embodiment, the total weight of the coating is preferably less than or equal to 8% by weight. Any combination of these upper and lower limits may be suitable and used herein.

Suitable carbon allotropes for the present invention include, for example, carbon black, graphite, graphene, amorphous carbon, buckminsterfullerenes, carbon nanotubes including carbon nanobuds, glassy carbon, carbon nanofoam, linear acetylenic carbon, etc. In accordance with the present invention, it is preferred that the carbon allotrope comprise single-walled nanotubes, few-walled nanotubes, multi-walled nanotubes, graphite and/or carbon black. In particular, carbon black and multi-walled nanotubes are preferred as the carbon allotropes. Multi-walled carbon nanotubes are most preferred as the carbon allotropes.

In accordance with the present invention, suitable carbon allotropes are selected from the group consisting of (a) carbon allotropes which are charged by direct covalent attachment to a cationic group, (b) carbon allotropes which are charged by direct covalent attachment to an anionic group, (c) non-covalent complexes of carbon allotropes and at least one cationically charged surfactant, (d) non-covalent complexes of carbon allotropes and at least one anionically charged surfactant, (e) mixtures of (a) and (c), and (f) mixtures of (b) and (d). Thus, in essence the carbon allotropes are either anionically charged or cationically charged.

Carbon allotropes which are charged by direct covalent attachment to a cationic functional group are suitable as described above. These cationic functional groups are covalently attached to the carbon allotrope. Suitable cationic functional groups include, for example, but are not be limited to, ammonium, including pH-dependent primary, secondary, or tertiary amines and permanently charged quaternary ammonium cations, and phosphonium groups, etc. Of these, ammonium groups are preferred cationic functional groups.

Carbon allotropes which are charged by direct covalent attachment to an anionic functional group are suitable as described above. These anionic functional groups are covalently attached to the carbon allotrope. Suitable anionic functional groups include, for example, but are not be limited to, alkoxides, carboxylates, sulfonates, phenoxides, sulfides, phosphonates, etc. Of these, carboxylates and sulfonates are preferred anionic functional groups.

In accordance with the present invention, it is also possible to use non-covalent complexes of carbon allotropes with a surfactant which is anionically charged. Anionic surfactants are well known in the art and may contain, but are not limited to, the following functional groups: phosphates, phosphonates, carboxylates, sulfates, sulfonates, etc. Sodium deoxycholate is a preferred anionic surfactant.

Also suitable are non-covalent complexes of carbon allotropes with a surfactant that is cationically charged. Cationic surfactants are well known in the art and may contain, but are not limited to, the following functional groups: quaternary ammonium salts, amides and ammonium salts derived from protonation of primary, secondary or tertiary amines, etc. Poly(diallyldimethylammonium chloride) is a preferred cationic surfactant.

Additional functionalization reactions for carbon allotropes that may be covalent or non-covalent in nature, and which may be suitable to provide the desired charge to the carbon allotropes herein are known and described in, for example, the article by Yi Lin et al titled "Functionalized Carbon Nanotubes for Polymeric Nanocomposites" in J. Mater. Chem, 2007, Vol. 17. pp 1143-1148. Various methods of functionalizing carbon allotropes are known and described in the references, the disclosures of which are hereby incorporated by reference in their entirty: the article by Ya-Ping Sun et al titled "Soluble Dendron-Functionalized Carbon Nanotubes: Preparation, Characterization, and Properties" in Chem. Mater., 2001, Vol. 13, No. 9, pp. 2864-2869; the article by Dimitrios Tasis et al titled "Chemistry of Nanotubes in Chemical Reviews, 2006, Vol. 106, No. 3, pp. 1105-1136; and the article by Ya-Ping Sun et al titled "Functionalized Carbon Nanotubes: Properties and Applications in Accounts of Chemical Research, Vol. 35, No. 12, 2002, pp. 1096-1104. The article "The Preparation of Cation-Functionalized Mult-Walled Carbon Nanotube/Sulfonated Polyurethane Composites" by Renlong Gao et al, in Carbon, November 2012, also describes a method for functionalizing carbon allotropes.

Suitable charged polymers to be used in accordance with the present invention to form coated the polyurethane foams include, but are not limited to, cationically charged polymers and anionically charged polymers. Some examples of suitable cationically charged polymers contain, but are not limited to, the following functional groups: quaternary ammonium salts, amides and ammonium salts derived from protonation of primary, secondary or tertiary amines, etc. Suitable cationically charged polymers for the invention include, but are not limited to, polyethylene imine, poly(diallyldimethylammonium chloride), N-methyl-N-vinylacetamide. Some examples of suitable anionically charged polymers to be used in accordance with the present invention contain, but are not limited to, the following functional groups: phosphates, phosphonates, carboxylates, sulfates, sulfonates, etc. Suitable anionically charged polymers for the invention include, but are not limited to, poly(sodium 4-styrenesulfonate), polyacrylic acid salts, etc. These and other suitable cationic and anionic polymers are described by Bjoern Schoeler et al in "Macromolecules 2002, Vol. 35, pp. 889-897.

In accordance with the present invention, the coated polyurethane foams herein are characterized as being dissipative, i.e. they exhibit a surface resistivity of between 10⁵ and 10¹² ohms per square, or preferably they are characterized as being conductive, i.e. they preferably exhibit a surface resistivity of less than 10⁵ ohms per square. It is most preferred that the coated polyurethane foams of the present invention exhibit a surface resistivity of between 10³ to 10⁴ ohms per square.

In a preferred embodiment, the non-covalent complex of the carbon allotrope and the ionic surfactant comprises multi-walled carbon nanotubes and dioxychlolate sodium salt. These are preferably applied by dipping the foam substrate in a dispersion of the carbon nanotubes and the dioxychlolate sodium salt. It is preferred that these dispersions are treated by sonication.

Anionic dispersion are prepared by adding the desired amount of carbon allotropes (e.g. MWNTs, carbon nanotubes, etc.) to deionized water, and adding an anionic surfactant, such as sodium deoxycholate (DOC). The addition of anionic surfactant causes heavily bundled MWNTs to exfoliate during sonication, thereby creating a stable, homogeneous dispersion. Unlike film coatings, the coating process of polyurethane foams requires a large amount of dispersion. Therefore, 2 steps of sonication are used to prepare the dispersions for coating polyurethane foams. These include first tip sonication at 8 to 12 W (preferably 10 W) of the concentrated carbon allotrope (e.g. MWNT) dispersions for a total of 15 to 25 minutes (preferably a total of 20 minutes), and then bath sonication of diluted dispersion to remove large nanotube bundles and impurities. The ultrasonicator and sonication tip used herein were designed for small amount of dispersions, i.e. up to about 100 ml.

In a preferred embodiment, about 1.5 wt. % carbon allotropes (preferably carbon nanotube, more preferably MWNTs) are dissolved in 100 ml deionized water containing 2 wt. % sodium DOC, followed by vigorous shaking, mechanical rolling for 12 hours, and then 10 W tip sonication for 20 min (2 cycles of 10 min sonication with a 2 min pause). Next, the concentrated carbon allotrope (preferably carbon nanotube) dispersion is diluted with deionized water and additional sodium DOC to make a 0.3 wt. % carbon allotrope (preferably carbon nanotubes, more preferably MWNTs) and 2 wt. % sodium DOC aqueous dispersion. This final dilutive dispersion is mechanically rolled for an hour and then bath sonicated at 8-12 W (preferably 10 W) for an hour before use.

In accordance with the present invention, all dispersions were used without altering the pH. The PUR foams were prepared and cut to size and used for sheet resistance measurements. Once the deposition of the coating was completed, samples were stored in an 80°C oven for overnight prior to testing. Drying of the coated foams preferably occurs after the deposition of all layers onto the foam.

The coating process was as follows.

The polyurethane foam substrate was coated by first applying a first dispersion containing a charged material (either anionically charged or cationically charged) to the foam substrate, and then removing excess liquid from the foam sample. Dipping the foam substrate into a dispersion containing the charged material is a preferred method of applying the solution. The excess liquid is preferably removed from the foam sample by, for example, wringing, or squeezing the foam between two plates, rollers, etc. The foam sample is then dipped into a clean rinse bath of deionized water, and then the excess water is removed from the foam sample by wringing, squeezing, etc. Next, a second dispersion containing a charged material (either cationically charged or anionically charged) was applied to the foam sample, preferably by dipping the foam sample into the solution, and then the excess liquid was removed from the foam sample by wringing, squeezing, etc. This was followed by dipping the foam sample into another clean rinse batch, and removing the excess water from the sample by suitable means. These steps of the process form one bilayer of coating on the polyurethane foam sample. This process was repeated until the desired number of bilayers was applied to each foam sample. Finally, the coated foam sample was dried.

In the above process, if the first dispersion contains anionically charged material, then the second dispersion contains cationically charged material. Likewise, if the first dispersion contains cationically charged material, then the second dispersion contains anionically charged material.

In addition, the above described process may contain additional drying steps. More specifically, the foam sample may optionally be dried after one or both rinses in deionized water.

In a preferred embodiment of the invention, a cationic 0.25 wt. % PDDA aqueous dispersion is prepared by dissolving in 18.2 MΩ deionized water. An aqueous dispersion comprising 0.3 wt. % MWNT and 2 wt. % sodium DOC is used as the anionic solution. Both dispersions are used without altering the pH. Clean samples of polyurethane foam are first immersed into the PDDA dispersion for 5 minutes, followed by fully squeezing out the liquid with two clean plates. Then, the foam samples are dipped into a clean deionized water bath for 5 minutes, followed by squeezing out the excess water. Next, the foam samples are immersed or dipped into the sodium DOC-stabilized MWNT suspension for 5 minutes, followed by removing the liquid by squeezing, then dipping into a clean rinse bath for 5 minutes, and squeezing out the water. These steps comprise one complete cycle which yields one bilayer (i.e., one cationic-anionic pair) on the polyurethane foam substrate. The process is repeated to deposit the desired number of bilayers on each foam sample. Following deposition, all foams were stored in an 80 °C oven for overnight prior to testing.

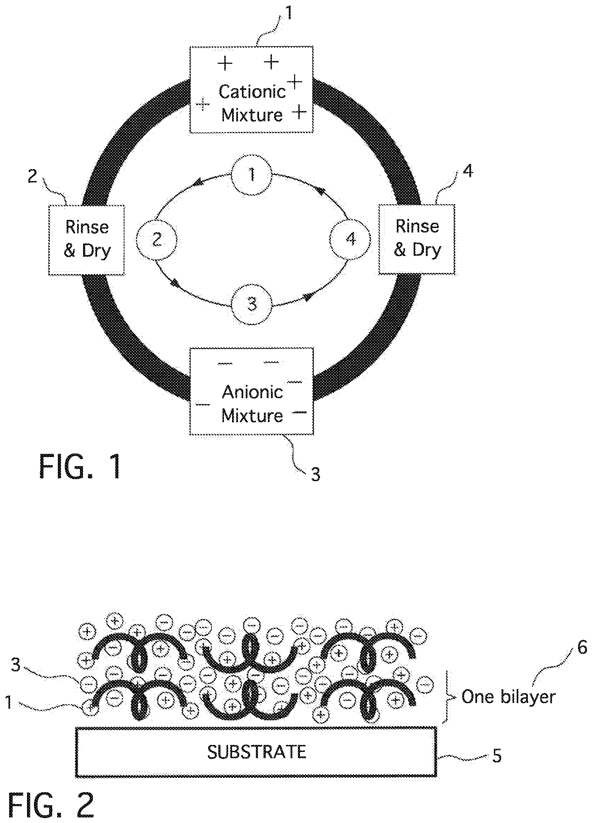

Reference will now be made to one embodiment of the present invention as illustrated in Figure **1.** Figure **1** is a schematic view of a layer-by-layer deposition process for applying layers of coatings to a substrate. In this view, a cationic mixture **1** is applied to a substrate (not shown), followed by a rinse and dry step **2,** then an anionic mixture **3** is applied, followed by another rinse and dry step **4.** This forms a first bilayer of the coating composition on the polyurethane foam substrate. The process is repeated as many times as necessary to form additional bilayers of coatings on the polyurethane foam substrate.

Figure **2** illlustrates a side view of a polyurethane foam substrate **5** which is coated with one bilayer **6** formed using the layer-by-layer process described and illustrated in Figure **1****.** The first material in bilayer **6** was a cationically charged material **1,** and the second material in bilayer **6** was an anionically charged material **3.**

The Figures illustrating these embodiments have been simplified for ease of viewing and understanding.

The following examples further illustrate details for the process of this invention. The invention, which is set forth in the foregoing disclosure, is not to be limited either in spirit or scope by these examples. Those skilled in the art will readily understand that known variations of the conditions of the following procedures can be used. Unless otherwise noted, all temperatures are degrees Celsius and all parts and percentages are parts by weight and percentages by weight, respectively.

### EXAMPLES

The following materials were used to prepare polyurethane foam substrates.

The prepared polyurethane foam substrates were coated with the anionically charged carbon allotrope and the cationically charged polymer as described herein to form coated polyurethane foams.

| | |
|---|---|
| Polyol A: | a poly(oxypropyleneoxyethylene) polyol started with a combination of glycerin and propylene glycol to yield a nominal functionality of about 2.8, having a hydroxyl number of about 56, and containing about 7% of internal spread oxyethylene to yield a primary hydroxyl end group content of less than about 10% (i.e. >90% secondary hydroxyl content). DMC was used as the alkoxylation catalyst |
| Polyol B: | a glycerin started poly(oxypropyleneoxyethylene) polyol having a hydroxyl number of about 53, and containing about 13% of internal spread oxyethylene to yield a primary hydroxyl end group content of less than about 5% (i.e. >95% secondary hydroxyl content). KOH was used as the alkoxylation catalyst |
| Polyol C: | a SAN filled polymer polyol containing about 10% by weight solids and having a hydroxyl number of about 30 |
| MonolA: | a poly(oxyalkylene) monol of about 4000 MW that is grafted with ∼ 10% acrylic acid; a lubricant |
| DEOA: | diethanolamine |
| Surfactant A: | a silicone surfactant commercially available as NIAX L635 from Momentive Performance Materials |
| Surfactant B: | a silicon surfactant commercially available as NIAX L620 from Momentive Performance Materials |
| Surfactant C: | a silicon surfactant commercially available as NIAX C-183 from Momentive Performance Materials |

| | |
|---|---|
| Catalyst A: | an amine catalyst blend comprising 70% by weight bis(dimethylaminoethyl)ether and 30% by weight dipropylene glycol, commercially available as NIAX A-1 from Momentive Performance Materials |
| Catalyst B: | an amine catalyst, commercially available as NIAX A-33 from Momentive Performance Materials |
| Catalyst C: | a 50:50 blend of stannous octoate, i.e. DABCO T-9, and dioctylphthalate, a diluent. This catalyst blend is commercially available as DABCO T-10 from Air Products |
| Catalyst D: | stannous octoate, a tin catalyst, which is commercially available as DABCO T-9 from Air Products |
| Catalyst E: | a 25% solution of Dabco T-12 catalyst (dibutyltin dilaurate) available from Air Products in diisononylphthalate (available from Ashland Chemical) |
| Iso A: | toluene diisocyanate containing 80% by weight of the 2,4-isomer and 20% by weight of the 2,6-isomer |

### FOAM PRODUCTION PROCESSES:

The free-rise bench scale foams, i.e. Example 2, Example 3, and Example 4 were prepared using the following procedure. The polyols, Monol A, water, silicone surfactant, and amine catalyst were added to a one-half gallon cylindrical container fitted with baffles. The contents were mixed at 2400 rpm for 60 seconds with an agitator having two turbine impellers. The mixture was then degassed for 15 seconds. The tin catalyst was added at this time. The contents were mixed at 2400 rpm for 15 seconds, during which period the isocyanate was added when about 7 seconds of mixing time remained. The mixture was then poured into a 14 x 14 x 6-inch cardboard box, where it rose freely until the reaction was complete. A batch size sufficient to give a bun at least about 6 inches high was employed. The freshly prepared bun was cured for 5 minutes in an oven at 120°C and then allowed to cure at ambient conditions for a minimum of 1 day. Observations made during foaming and curing are set forth in the TABLE 1. The buns were then trimmed to 12 x 12 x 4 inches. These samples were then conditioned for at least 16 hours at standard temperature (∼23°C) and humidity (∼50%) before being tested. Physical properties of the foams are set forth in TABLE 2 Samples of the foams were provided for coating.

The free-rise viscoelastic foam, i.e. Example 1, was produced using a one-third scale Maxfoam machine with Novaflex liquid CO₂ capabilities. The polyol and liquid carbon dioxide streams were combined under pressure and flowed into the mixhead along with separate streams which contained the isocyanate component and the other individual additives where they were thoroughly mixed together at a pressure that was controlled to a level to just keep the carbon dioxide in the liquid state. The pressure was let down by passing the mixture through a sieve pack in the 6 cm diameter creamer where the conversion of the carbon dioxide to a gaseous state created a froth that was deposited directly onto a moving conveyor. The froth flowed to the conveyor sides and continued to expand as additional carbon dioxide gas was generated from the reaction of water blowing agent with isocyanate. The expansion was primarily downwards as the conveyor bottom decreased in height through a series of four fall plates. As the urea and urethane reactions progressed, the expanding liquid was converted to a solid polyurethane foam block. The foam block was about 91 cm wide and about 90 cm high. After lining out the foam was typically run for about 500 cm. After curing for at least 2 days, a test specimen (38x38x10 cm) and additional samples for coating were cut from the middle of the foam cross-section. The test specimen was then conditioned for at least 16 hours at standard temperature (∼23°C) and humidity (∼50%) before testing.

The foam formulations are set forth in TABLE 1. The foams in TABLE 1 were tested per the procedures in ASTM D 3574-08 and the results are set forth in TABLE 2. Samples of the foams were then coated with the dispersions as described herein to form coated polyurethane foams.

**TABLE 1: Foam Formulations - Examples 1-4**

| Example | 1 | 2 | 3 | 4 |
|---|---|---|---|---|
| **Formulations** | | | | |
| Polyol A | 100.00 | 100.00 | | |
| Polyol B | | | 95.00 | |
| Polyol C | | | | 100 |
| Monol A | | 1.00 | 5.00 | |
| DEOA | | | | 3.00 |
| Water (distilled) | 4.00 | 4.00 | 4.00 | 3.25 |
| Surfactant A | 1.50 | | | |
| Surfactant B | | 1.20 | 1.20 | |
| Surfactant C | | | | 0.15 |
| Catalyst A | 0.18 | 0.10 | 0.25 | |
| Catalyst B | 0.18 | 0.10 | 0.25 | |
| Catalyst C | 0.26 | | | |
| Catalyst D | | 0.17 | 0.25 | |
| Catalyst E | | | | 0.20 |
| CO₂ | 1.50 | | | |
| Isocyanate A | 52.2 | 52.3 | 48.5 | 46.64 |
| Isocyanate Index | 110.0 | 110.0 | 103.0 | 107.00 |

| **Foam Processing Details** | | | | |
|---|---|---|---|---|
| Settle (%) | nm⁽¹⁾ | 1.23 | 1.22 | 8.60 |
| Cell Structure | Very fine | Very fine | Fine | Medium |

| | | | | |
|---|---|---|---|---|
| (1) not measured | | | | |

**TABLE 2: Physical Properties of Foams 1-3**

| **Foam** | 1 | 2 | 3 | 4 |
|---|---|---|---|---|
| **Physical Properties** | | | | |
| Density (lb/ft³) | 1.28 | 1.59 | 1.52 | 1.72 |
| Resilience (%) | 47 | 34 | 43 | 64 |
| Air Flow | 4.42 | nm⁽¹⁾ | 5.08 | nm⁽¹⁾ |
| IFD Height (ln) | 3.98 | 4.07 | 4.07 | 4.1 |
| IFD 25% (lb/50in²) | 24.4 | 37.3 | 19.5 | 16.87 |
| IFD65% (lb/50in²) | 50.5 | 70.7 | 38.1 | 38.2 |
| IFD 25% Return (lb/50in²) | 17.5 | 24.9 | 13.9 | 13.8 |
| Return Value @ 25% (%) | 71.8 | 66.8 | 71.2 | 81.9 |
| S.F. 65%/25% | 2.07 | 1.89 | 1.96 | 2.26 |
| Tensile Strength (psi) | 18.30 | nm⁽¹⁾ | 13.20 | nm⁽¹⁾ |
| Elongation (%) | 267 | nm⁽¹⁾ | 231 | nm⁽¹⁾ |
| Tear Strength (pli) | 2.6 | nm⁽¹⁾ | 1.3 | nm⁽¹⁾ |
| Compression Set 90% (%) | 4.5 | nm⁽¹⁾ | 5.6 | nm⁽¹⁾ |
| Wet Set 50% (%) | 5.8 | nm⁽¹⁾ | 4.5 | nm⁽¹⁾ |

| | | | | |
|---|---|---|---|---|
| (1) not measured | | | | |

The following materials and general procedure were used to coat each of the foams produced in Examples 1-4:

| | |
|---|---|
| Dispersion 1: | 0.25 wt. % poly(diallyldimethylammonium chloride) (PDDA) dispersion in deionized water. The poly(diallyldimethyl-ammonium chloride) (PDDA) had a MW of 100,00-200,000 g/mol and was purchased from Aldrich Chemical) |
| Dispersion 2: | 0.3 wt. % of a carbonaceous material (Baytubes C-150P) + 2 wt. % dioxycholate sodium salt. (Sodium deoxycholate was purchased from Aldrich Chemical) |

| | |
|---|---|
| Dispersion 3: | 0.3 wt. % of a carbonaceous material (carbon black) + 2 wt. % dioxycholate sodium salt |
| Baytubes C-150P: | multi-walled carbon nanotubes, commercially available from Bayer MaterialScience LLC |

### GENERAL PROCEDURE FOR COATING FOAMS:

Each of the foam substrates were coated with at least one bilayer. Each bilayer on each foam substrate was prepared by dipping the foam substrate in Dispersion 1 (see TABLE 3), removing excess solution, washing the coated foam substrate (with deionized water), removing the excess water, optionally drying the coated foam, dipping the coated foam substrate in Dispersion 2 or Dispersion 3 (see TABLE 3), removing excess solution, washing the coated foam substrate (with deionized water), removing excess water, and, optionally drying the coated polyurethane foam.

Additional bilayers were added in the same manner. Once the desired number of bilayers were applied to each foam substrate, the coated foam substrate was dried.

The foam substrates in the working examples were coated using the following procedure:
A cationic 0.25 wt %PDDA aqueous dispersion was prepared by adding PDDA to 18.2 MΩ deionized water. The anionic aqueous dispersion comprised 0.3 wt % MWNT and 2 wt % sodium DOC. All dispersions were used without altering the pH. Clean polyurethane foams were first immersed (or dipped) into the PDDA dispersion for 5 minutes, followed by completely squeezing out the excess liquid with two clean plates. Then, the foam samples were dipped into a clean deionized water bath for 5 minutes, followed by squeezing out the water. Next, the foam samples were immersed (or dipped) into the sodium DOC-stabilized MWNT suspension for 5 minutes, followed by squeezing out the excess liquid as described above. The foam sample was then dipped into a clean rinse bath for 5 minutes, and the excess water was squeezed out. These steps comprise one complete cycle, and yield one bilayer (i.e., one cationic-anionic pair) of coating on the polyurethane foam samples.

The above described process was repeated to deposit the desired number of bilayers onto the foam samples. Following deposition of the desired number of bilayers, all the foam samples were stored in an 80 °C oven overnight prior to testing.

**TABLE 3: Conductive Foams Prepared by Layer-by-Layer Process**

| Coated Sample | Foam Type | Conducting Carbonaceous Material | # of Bilayers | Coating wt. % | Surface Resistance (ohms per square) |
|---|---|---|---|---|---|
| 1*** | Ex. 1 | none | 1 | 1.74 | > 10¹² |
| 2*** | Ex. 3 | none | 1 | 1.76 | > 10¹² |
| 3 | Ex. 2 | Baytubes C-150P | 3 | 1.59 | 10⁴ |
| 4 | Ex. 1 | Baytubes C-150P | 3 | 2.45 | 10³ |
| 5 | Ex. 3 | Baytubes C-150P* | 1 | 3.43 | 10³ |
| 6 | Ex. 1 | Baytubes C-150P* | 2 | 3.70 | 10³ |
| 7 | Ex. 1 | Baytubes C-150P* | 1 | 3.72 | 10³ |
| 8 | Ex. 3 | Baytubes C-150P* | 1 | 4.35 | 10³ |
| 9 | Ex. 3 | Baytubes C-150P* | 2 | 5.44 | ≤ 10³ |
| 10 | Ex. 1 | Baytubes C-150P | 1 | 9.30 | 10³ |
| 11** | Ex. 3 | Carbon Black | 1 | 0.92 | > 10¹² |
| 12 | Ex. 1 | Carbon Black | 1 | 1.88 | 10⁷ - 10⁹ |
| 13 | Ex .4 | Baytubes C-150P | 3 | nm | 10⁴ |
| 14 | Ex. 4 : | Baytubes C-150P | 3 | nm | 10⁵ - 10⁶ |
| 15 | Ex. 2 | Baytubes C-150P | 3 | nm | 10³ |
| 16 | Ex. 2 | Baytubes C-150P | 3 | nm | 10³ |
| 17 ⁽¹⁾ | Ex. 1 | Baytubes C-150P | 3 | 2.13% | 10³ |
| 18 ⁽²⁾ | Ex. 2 | Baytubes C-150P | 3 | 1.78% | 10⁴ |
| 19 | Ex. 1 | Carbon Black | 3 | 4.26% | 10⁴ |
| 20 | Ex. 3 | Carbon Black | 3 | 7.54% | 10³ - 10⁴ |
| 21 | Ex. 1 | Carbon Black | 3 | 1.35% | 10⁵ |

| | | | | | |
|---|---|---|---|---|---|
| * CNT/DOC dispersions were treated by sonication prior to dipping for LBL coating process ** comparison example; wt.% of the coating composition was too low *** comparison examples; no conducting carbonaceous material present (1) Example 17 contained 0.10 wt. % of carbonaceous material in the foam, and 4.13 wt. % of carbonaceous material in the coating (2) Example 18 contained 0.16 wt. % of carbonaceous material in the foam nm = not measured | | | | | |

Although the invention has been described in detail in the foregoing for the purpose of illustration, it is to be understood that such detail is solely for that purpose and that variations can be made therein by those skilled in the art without departing from the scope of the invention except as it may be limited by the claims.

## Claims

1. A process for preparing a coated polyurethane foam comprising:
(1) providing a polyurethane foam substrate;
(2) applying a layer of a first material to the polyurethane foam substrate;
(3) rinsing the coated polyurethane foam substrate with deionized water;
(4) optionally, drying the coated polyurethane foam substrate with air;
(5) applying a layer of a second material to the coated polyurethane foam substrate;
(6) rinsing the coated polyurethane foam substrate with deionized water;
(7) optionally, drying the coated polyurethane foam substrate with air;
and
(8) optionally, repeating the process to form additional bilayers of coatings on the polyurethane foam substrate;
wherein (i) said first material and said second material are oppositely charged materials, (ii) one of said first material and said second material is a charged carbon allotrope which is selected from the group consisting of
(a) carbon allotropes which are charged by direct covalent attachment to a cationic group,
(b) carbon allotropes which are charged by direct covalent attachment to an anionic group,
(c) non-covalent complexes of carbon allotropes with a surfactant that is cationically charged,
(d) non-covalent complexes of carbon allotropes with a surfactant that is anionically charged,
(e) mixtures of (a) and (c)
and
(f) mixtures of (b) and (d);
(iii) the other of said first material and said second material is a charged polymer, (iv) the resultant coated polyurethane foam has a surface resistivity of less than or equal to 10¹² ohms per square, and (v) the resultant coated polyurethane foam contains at least 1% by weight and less than 10% by weight of the coating composition, based on 100% by weight of the coated polyurethane foam.

2. The process of Claim 1, wherein said first material or second material is a charged carbon allotrope comprising (d) non-covalent complexes of carbon allotropes with a surfactant that is anionically charged

3. The process of any one of Claims 1 to 2, wherein said carbon allotropes are selected from the group consisting of carbon black and carbon nanotubes, and said anionically charged surfactant comprises sodium deoxycholate.

4. The process of any one of Claims 1 to 3, wherein said charged polymer comprises poly(diallyldimethylammonium chloride).

5. The process of any one of Claims 1 to 4, wherein said carbon allotropes comprise multi-walled carbon nanotubes.

6. The process of any one of Claims 1 to 5, wherein the coated polyurethane foam has a surface resistivity of less than 10⁵ ohms per square.

7. The process of any one of Claims 1 to 4, wherein said carbon allotropes comprise carbon black, and the coated polyurethane foam contains greater than or equal to 1.25% by weight of the coating composition, based on 100% by weight of the coated polyurethane foam.

8. The process of any one of Claims 1 to 8, wherein the coated polyurethane foam has a surface resistivity of from 10³ to 10⁴ ohms per square.

9. A coated polyurethane foam having surface resistivity of less than or equal 10¹² ohms per square, and which comprises:
(a) a polyurethane foam substrate,
and
(b) at least one bilayer of a coating composition on the polyurethane foam substrate, wherein said coating composition comprises:
(1) at least one layer of a charged carbon allotrope which is selected from the group consisting of
(a) carbon allotropes which are charged by direct covalent attachment to a cationic group,
(b) carbon allotropes which are charged by direct covalent attachment to an anionic group,
(c) non-covalent complexes of carbon allotropes with a surfactant that is cationically charged,
(d) non-covalent complexes of carbon allotropes with a surfactant that is anionically charged,
(e) mixtures of (a) and (c)
and
(f) mixtures of (b) and (d);
and
(2) at least one layer of a charged polymer;
wherein (i) the charged polymer is anionically charged when the carbon allotrope is cationically charged and the charged polymer is cationically charged when the carbon allotrope is anionically charged; and (ii) the coated polyurethane foam contains at least 1% by weight and less than 10% by weight of the coating composition, based on 100% by weight of the coated polyurethane foam.

10. The coated polyurethane foam of Claim 9, wherein said first material or second material is a charged carbon allotrope comprising (d) non-covalent complexes of carbon allotropes with a surfactant that is anionically charged.

11. The coated polyurethane foam of any one of Claims 9 to 10, wherein said carbon allotropes are selected from the group consisting of carbon black and carbon nanotubes, and said anionically charged surfactant comprises sodium deoxycholate.

12. The coated polyurethane foam of any one of Claims 9 to 11, wherein said charged polymer comprises poly(diallyldimethylammonium chloride).

13. The coated polyurethane foam of any one of Claims 9 to 12, wherein said carbon allotropes comprise multi-walled carbon nanotubes.

14. The coated polyurethane foam of any one of Claims 9 to 13, wherein the coated polyurethane foam has a surface resistivity of less than 10⁵ ohms per square.

15. The coated polyurethane foam of any one of Claims 9 to 14, wherein the coated polyurethane foam has a surface resistivity of from 10³ to 10⁴ ohms per square.

## Patentansprüche

1. Verfahren zur Herstellung eines beschichteten Polyurethanschaumstoffs, umfassend:
(1) Bereitstellen eines Polyurethanschaumstoffsubstrats;
(2) Aufbringen einer Schicht eines ersten Materials auf das Polyurethanschaumstoffsubstrat;
(3) Spülen des beschichteten Polyurethanschaumstoffsubstrats mit vollentsalztem Wasser;
(4) gegebenenfalls Trocknen des beschichteten Polyurethanschaumstoffsubstrats mit Luft;
(5) Aufbringen einer Schicht eines zweiten Materials auf das beschichtete Polyurethanschaumstoffsubstrat;
(6) Spülen des beschichteten Polyurethanschaumstoffsubstrats mit vollentsalztem Wasser;
(7) gegebenenfalls Trocknen des beschichteten Polyurethanschaumstoffsubstrats mit Luft;
und
(8) gegebenenfalls Wiederholen des Verfahrens zur Bildung zusätzlicher Doppelschichten von Beschichtungen auf dem Polyurethanschaumstoffsubstrat;
wobei (i) es sich bei dem ersten Material und dem zweiten Material um entgegengesetzt geladene Materialien handelt, (ii) es sich bei einem des ersten Materials und des zweiten Materials um ein geladenes Kohlenstoff-Allotrop handelt, das aus der Gruppe bestehend aus
(a) Kohlenstoff-Allotropen, die durch direkte kovalente Anbindung an eine kationische Gruppe geladen sind,
(b) Kohlenstoff-Allotropen, die durch direkte kovalente Anbindung an eine anionische Gruppe geladen sind,
(c) nichtkovalente Komplexe von Kohlenstoff-Allotropen mit einem Tensid, das kationisch geladen ist,
(d) nichtkovalente Komplexe von Kohlenstoff-Allotropen mit einem Tensid, das anionisch geladen ist,
(e) Mischungen von (a) und (c)
und
(f) Mischungen von (b) und (d)
ausgewählt ist;
(iii) es sich bei dem anderen des ersten Materials und des zweiten Materials um ein geladenes Polymer handelt, (iv) der erhaltene beschichtete Polyurethanschaumstoff einen spezifischen Oberflächenwiderstand kleiner oder gleich 10¹² Ohm pro Quadrat aufweist und (v) der erhaltene beschichtete Polyurethanschaumstoff mindestens 1 Gew.-% und weniger als 10 Gew.-% der Beschichtungszusammensetzung, bezogen auf 100 Gew.-% des beschichteten Polyurethanschaumstoffs, enthält.

2. Verfahren nach Anspruch 1, bei dem es sich bei dem ersten Material oder zweiten Material um ein geladenes Kohlenstoff-Allotrop handelt, das (d) nichtkovalente Komplexe von Kohlenstoff-Allotropen mit einem Tensid, das anionisch geladen ist, umfasst.

3. Verfahren nach einem der Ansprüche 1 bis 2, bei dem die Kohlenstoff-Allotrope aus der Gruppe bestehend aus Ruß und Kohlenstoffnanoröhren ausgewählt sind und das anionisch geladene Tensid Natriumdesoxycholat umfasst.

4. Verfahren nach einem der Ansprüche 1 bis 3, bei dem das geladene Polymer Poly(diallyldimethyl-ammoniumchlorid) umfasst.

5. Verfahren nach einem der Ansprüche 1 bis 4, bei dem die Kohlenstoff-Allotrope mehrwandige Kohlenstoffnanoröhren umfassen.

6. Verfahren nach einem der Ansprüche 1 bis 5, bei dem der beschichtete Polyurethanschaumstoff einen spezifischen Oberflächenwiderstand von weniger als 10⁵ Ohm pro Quadrat aufweist.

7. Verfahren nach einem der Ansprüche 1 bis 4, bei dem die Kohlenstoff-Allotrope Ruß umfassen und der beschichtete Polyurethanschaumstoff größer oder gleich 1,25 Gew.-% der Beschichtungszusammensetzung, bezogen auf 100 Gew.-% des beschichteten Polyurethanschaumstoffs, enthält.

8. Verfahren nach einem der Ansprüche 1 bis 8, bei dem der beschichtete Polyurethanschaumstoff einen spezifischen Oberflächenwiderstand von 10³ bis 10⁴ Ohm pro Quadrat aufweist.

9. Beschichteter Polyurethanschaumstoff, der einen spezifischen Oberflächenwiderstand kleiner oder gleich 10¹² Ohm pro Quadrat aufweist und Folgendes umfasst:
(a) ein Polyurethanschaumstoffsubstrat
und
(b) mindestens eine Doppelschicht einer Beschichtungszusammensetzung auf dem Polyurethanschaumstoffsubstrat, wobei die Beschichtungszusammensetzung Folgendes umfasst:
(1) mindestens eine Schicht eines geladenen Kohlenstoff-Allotrops, das aus der Gruppe bestehend aus
(a) Kohlenstoff-Allotropen, die durch direkte kovalente Anbindung an eine kationische Gruppe geladen sind,
(b) Kohlenstoff-Allotropen, die durch direkte kovalente Anbindung an eine anionische Gruppe geladen sind,
(c) nichtkovalente Komplexe von Kohlenstoff-Allotropen mit einem Tensid, das kationisch geladen ist,
(d) nichtkovalente Komplexe von Kohlenstoff-Allotropen mit einem Tensid, das anionisch geladen ist,
(e) Mischungen von (a) und (c) und
(f) Mischungen von (b) und (d) ausgewählt ist;
und
(2) mindestens eine Schicht eines geladenen Polymers;
wobei (i) das geladene Polymer anionisch geladen ist, wenn das Kohlenstoff-Allotrop kationisch geladen ist, und das geladene Polymer kationisch geladen ist, wenn das Kohlenstoff-Allotrop anionisch geladen ist; und (ii) der beschichtete Polyurethanschaumstoff mindestens 1 Gew.-% und weniger als 10 Gew.-% der Beschichtungszusammensetzung, bezogen auf 100 Gew.-% des beschichteten Polyurethanschaumstoffs, enthält.

10. Beschichteter Polyurethanschaumstoff nach Anspruch 9, wobei es sich bei dem ersten Material oder zweiten Material um ein geladenes Kohlenstoff-Allotrop handelt, das (d) nichtkovalente Komplexe von Kohlenstoff-Allotropen mit einem Tensid, das anionisch geladen ist, umfasst.

11. Beschichteter Polyurethanschaumstoff nach einem der Ansprüche 9 bis 10, wobei die Kohlenstoff-Allotrope aus der Gruppe bestehend aus Ruß und Kohlenstoffnanoröhren ausgewählt sind und das anionisch geladene Tensid Natriumdesoxycholat umfasst.

12. Beschichteter Polyurethanschaumstoff nach einem der Ansprüche 9 bis 11, wobei das geladene Polymer Poly(diallyldimethylammoniumchlorid) umfasst.

13. Beschichteter Polyurethanschaumstoff nach einem der Ansprüche 9 bis 12, wobei die Kohlenstoff-Allotrope mehrwandige Kohlenstoffnanoröhren umfassen.

14. Beschichteter Polyurethanschaumstoff nach einem der Ansprüche 9 bis 13, wobei der beschichtete Polyurethanschaumstoff einen spezifischen Oberflächenwiderstand von weniger als 10⁵ Ohm pro Quadrat aufweist.

15. Beschichteter Polyurethanschaumstoff nach einem der Ansprüche 9 bis 14, wobei der beschichtete Polyurethanschaumstoff einen spezifischen Oberflächenwiderstand von 10³ bis 10⁴ Ohm pro Quadrat aufweist.

## Revendications

1. Procédé de préparation d'une mousse de polyuréthane revêtue, comprenant :
(1) la fourniture d'un substrat en mousse de polyuréthane ;
(2) l'application d'une couche d'un premier matériau sur le substrat en mousse de polyuréthane ;
(3) le rinçage du substrat en mousse de polyuréthane revêtue avec de l'eau désionisée ;
(4) optionnellement, le séchage du substrat en mousse de polyuréthane revêtue avec de l'air ;
(5) l'application d'une couche d'un deuxième matériau sur le substrat en mousse de polyuréthane revêtue ;
(6) le rinçage du substrat en mousse de polyuréthane revêtue avec de l'eau désionisée ;
(7) optionnellement, le séchage du substrat en mousse de polyuréthane revêtue avec de l'air ;
et
(8) optionnellement, la répétition du processus pour former des doubles couches additionnelles de revêtements sur le substrat en mousse de polyuréthane ;
dans lequel (i) ledit premier matériau et ledit deuxième matériau sont des matériaux à charge opposée, (ii) l'un dudit premier matériau et dudit deuxième matériau est un allotrope de carbone chargé qui est sélectionné dans le groupe constitué de :
(a) allotropes de carbone qui sont chargés par fixation covalente directe à un groupe cationique,
(b) allotropes de carbone qui sont chargés par fixation covalente directe à un groupe anionique,
(c) complexes non covalents d'allotropes de carbone avec un tensioactif qui a une charge cationique,
(d) complexes non covalents d'allotropes de carbone avec un tensioactif qui a une charge anionique,
(e) mélanges de (a) et (c),
et
(f) mélanges de (b) et (d) ;
(iii) l'autre dudit premier matériau et dudit deuxième matériau est un polymère chargé, (iv) la mousse de polyuréthane revêtue ainsi obtenue a une résistivité superficielle inférieure ou égale à 10¹² ohms par carré, et (v) la mousse de polyuréthane revêtue ainsi obtenue contient au moins 1 % en poids et moins de 10 % en poids de la composition de revêtement, relativement à 100 % en poids de la mousse de polyuréthane revêtue.

2. Procédé selon la revendication 1, dans lequel ledit premier matériau ou deuxième matériau est un allotrope de carbone chargé comprenant (d) des complexes non covalents d'allotropes de carbone avec un tensioactif qui a une charge anionique.

3. Procédé selon l'une quelconque des revendications 1 à 2, dans lequel lesdits allotropes de carbone sont sélectionnés dans le groupe constitué du noir de carbone et des nanotubes de carbone, et ledit tensioactif à charge anionique comprend le désoxycholate de sodium.

4. Procédé selon l'une quelconque des revendications 1 à 3, dans lequel ledit polymère chargé comprend le poly(chlorure de diallyldiméthylammonium).

5. Procédé selon l'une quelconque des revendications 1 à 4, dans lequel lesdits allotropes de carbone comprennent des nanotubes de carbone à parois multiples.

6. Procédé selon l'une quelconque des revendications 1 à 5, dans lequel la mousse de polyuréthane revêtue a une résistivité superficielle inférieure à 10⁵ ohms par carré.

7. Procédé selon l'une quelconque des revendications 1 à 4, dans lequel lesdits allotropes de carbone comprennent du noir de carbone, et la mousse de polyuréthane revêtue contient une quantité supérieure ou égale à 1,25 % en poids de la composition de revêtement, relativement à 100 % en poids de la mousse de polyuréthane revêtue.

8. Procédé selon l'une quelconque des revendications 1 à 8, dans lequel la mousse de polyuréthane revêtue a une résistivité superficielle de 10³ à 10⁴ ohms par carré.

9. Mousse de polyuréthane revêtue ayant une résistivité superficielle inférieure ou égale à 10¹² ohms par carré et qui comprend :
(a) un substrat en mousse de polyuréthane,
et
(b) au moins une double couche d'une composition de revêtement sur le substrat en mousse de polyuréthane, ladite composition de revêtement comprenant :
(1) au moins une couche d'un allotrope de carbone chargé qui est sélectionné dans le groupe constitué de :
(a) allotropes de carbone qui sont chargés par fixation covalente directe à un groupe cationique,
(b) allotropes de carbone qui sont chargés par fixation covalente directe à un groupe anionique,
(c) complexes non covalents d'allotropes de carbone avec un tensioactif qui a une charge cationique,
(d) complexes non covalents d'allotropes de carbone avec un tensioactif qui a une charge anionique,
(e) mélanges de (a) et (c),
et
(f) mélanges de (b) et (d) ;
et
(2) au moins une couche d'un polymère chargé ;
dans laquelle (i) le polymère chargé a une charge anionique lorsque l'allotrope de carbone a une charge cationique et le polymère chargé a une charge cationique lorsque l'allotrope de carbone a une charge anionique ; et (ii) la mousse de polyuréthane revêtue contient au moins 1 % en poids et moins de 10 % en poids de la composition de revêtement, relativement à 100 % en poids de la mousse de polyuréthane revêtue.

10. Mousse de polyuréthane revêtue selon la revendication 9, dans laquelle ledit premier matériau ou deuxième matériau est un allotrope de carbone chargé comprenant (d) des complexes non covalents d'allotropes de carbone avec un tensioactif qui a une charge anionique.

11. Mousse de polyuréthane revêtue selon l'une quelconque des revendications 9 à 10, dans laquelle lesdits allotropes de carbone sont sélectionnés dans le groupe constitué du noir de carbone et des nanotubes de carbone, et ledit tensioactif à charge anionique comprend le désoxycholate de sodium.

12. Mousse de polyuréthane revêtue selon l'une quelconque des revendications 9 à 11, dans laquelle ledit polymère chargé comprend le poly(chlorure de diallyldiméthylammonium).

13. Mousse de polyuréthane revêtue selon l'une quelconque des revendications 9 à 12, dans laquelle lesdits allotropes de carbone comprennent des nanotubes de carbone à parois multiples.

14. Mousse de polyuréthane revêtue selon l'une quelconque des revendications 9 à 13, la mousse de polyuréthane revêtue ayant une résistivité superficielle inférieure à 10⁵ ohms par carré.

15. Mousse de polyuréthane revêtue selon l'une quelconque des revendications 9 à 14, la mousse de polyuréthane revêtue ayant une résistivité superficielle de 10³ à 10⁴ ohms par carré.
